# EUROPEAN PATENT APPLICATION

(11) **EP 2 667 564 A1**
(43) Date of publication of application: **27.11.2013**
(21) Application number: 12290172.1
(22) Date of filing: 23.05.2012
(51) Int. Cl.: H04L 29/06

(54) **Method and system for enabling multi-level policies enforcement**

(71) Applicant: Alcatel Lucent, 75007 Paris (FR)
(72) Inventor: Kamga, Guy-Bertrand, 91620 Nozay (FR); Dupont, Marie-Pascale, 91620 Nozay (FR); Ghorbel, Mahmoud, 91620 Nozay (FR)
(74) Representative: Demulsant, Xavier

(57) **Abstract**

A method for enforcing data protection policies (2) intended to be applied for the protection of a data (1) while it is transmitted over a communications network, said method comprising the following steps
- splitting the data protection policies (2) into a plurality of policy elements;
- tagging each policy element with at least an enforcement level, within the communications network, of the said policy element;
- enforcing at the said enforcement level of at least a policy element tagged with the said enforcement level.

## Description

### FIELD OF THE INVENTION

The present invention relates to a method and a system for multi-level data protection policies enforcement while data are travelling over communications networks.

### BACKGROUND OF THE INVENTION

By data protection policies it is intended to mean rules governing the interactions (access, storage, processing, transferring, replication, or inspection for example) of network entities (operating system, infrastructure, user equipment, server, client application, network nodes for example) with data related to an entity connected to a communications network.

As used herein, the expression "enforcement level" is meant broadly and not restrictively, to include the layer/the point in the network in which a data protection policy is enforced (for example, at the level of an end-user application, an infrastructure service, and/or an operating system).

Data protection is usually ensured by the application of various types of policies. These data protection policies may concern several fields (for example privacy, security, and compliance) and several frameworks (for exemple, end-user, enterprise, network operator, and regulatory). Additionally, they can be described with various formats such as XACML, EPAL, SecPAL and the like.

Possible conflicts existing between the different policies associated to a given data can be managed through hierarchies defined between these policies (for example, a legal policy having priority on an end-user policy).

During data travelling over a communications network, the various entities
- that interact (e.g. access, storage, processing, transfer, duplication) with this data all along its lifecycle; and
- that must enforce this data related policies
generally have to analyze all the related policy elements to determine which one they have to consider. By "policy element", it is meant any data protection policy item intended to be enforced at, at least, one level of the network when an action is to be done on the protected data (e.g. edit, read, delete, copy, print, share, process, store, transfer).

Nevertheless, this automatic analysis, by an entity, of the whole set of policy elements to eventually consider only those intended to be enforced at this level, may result in performance issues during the enforcement. Each entity does not necessarily need to consider all the elements of the related policies.

Moreover, given that data are moving from one environment to another, the enforcement may have to be done at various levels (end-user applications, infrastructure services or server-side applications, operating systems, for example) according to the requirements of policy elements, in order to provide an end-to-end data protection. In particular, this matter may be even more complex within distributed environments, such as cloud.

One object of the present invention is to provide a system and a method enabling an efficient and flexible enforcement of data protection policies related to data while it is transmitted over a communications network.

Another object of the present invention is to alleviate data protection policies enforcement mechanism, while reinforcing data protection.

Another object of the present invention is to enable entities (for example, end-user applications, infrastructure, or platform services), having to enforce data protection policies, to consider only the elements of the policies relevant therefor.

Another object of the present invention is to provide more than one policies enforcement level entailed by data travelling over the network from one side to another (data travelling, data storage, data processing for example) and considering only relevant policies at each level.

Another object of the present invention is to improve privacy, security and compliance within distributed and untrusted environments such as cloud computing.

### SUMMARY

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to methods for enforcing data protection policies intended to be applied for the protection of a data while it is transmitted over a communications network, said methods comprising the following steps
- splitting the data protection policies into a plurality of policy elements;
- tagging each policy element with at least an enforcement level, within the communications network, of the said policy element;
- enforcing at the said enforcement level of at least a policy element tagged with the said enforcement level.

In accordance with a broad aspect, the splitting step of data protection policies into a plurality of policy elements may be based on
- the type of interactions with data that are governed by the data protection policies;
- the policy format of the data protection policies.

In accordance with another broad aspect, the above methods further comprise
- a transformation step of split policy elements into a common internal format;
- a sorting step of tagged policy elements by enforcement level;
- an extraction step, at a given enforcement level, from tagged policy elements those tagged with the given enforcement level.

In accordance with another broad aspect, the sorting step of tagged policy elements by enforcement level may be based on the type of security means intended for ensuring the minimum disclosure (confidentiality) and the integrity of data protection policies.

Various embodiments relate to systems for enforcing data protection policies intended to be applied for the protection of a data while it is transmitted over a communications network, said systems comprising the following means
- a data protection policy analysis module configured for splitting the data protection policies into a plurality of policy elements;
- a multi-level policy building module programmed for tagging each policy element with at least an enforcement level, within the communications network, of the said policy element;
- a specialized policy enforcement module configured for enforcing at the said enforcement level of at least a policy element tagged with the said enforcement level.

In accordance with a broad aspect, the above systems further comprise a tagging knowledge base including information permitting
- to identify policy elements inside the data protection policies;
- to associate policy elements with their respective corresponding enforcement levels.

In accordance with another broad aspect, the above systems further comprise an enforcement level-based policy extractor configured to extract, at a given enforcement level, from tagged policy elements those tagged with the given enforcement level.

Various embodiments further relate to a communications network entity comprising a specialized policy enforcement module as defined by the above systems.

Various embodiments further relate to a user equipment comprising a data protection policy analysis module and a multi-level policy building module as defined by the above systems.

Various embodiments further relate to a computer program product for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

The above and other objects and advantages of various embodiments will become apparent from the detailed description of preferred embodiments, considered in conjunction with the accompanying drawing, in which
- Fig.1 is a schematic diagram illustrating functional components according to one embodiment;
- Fig.2 is a schematic diagram illustrating a use case according to one embodiment.

### DESCRIPTION OF PREFERRED EMBODIMENTS

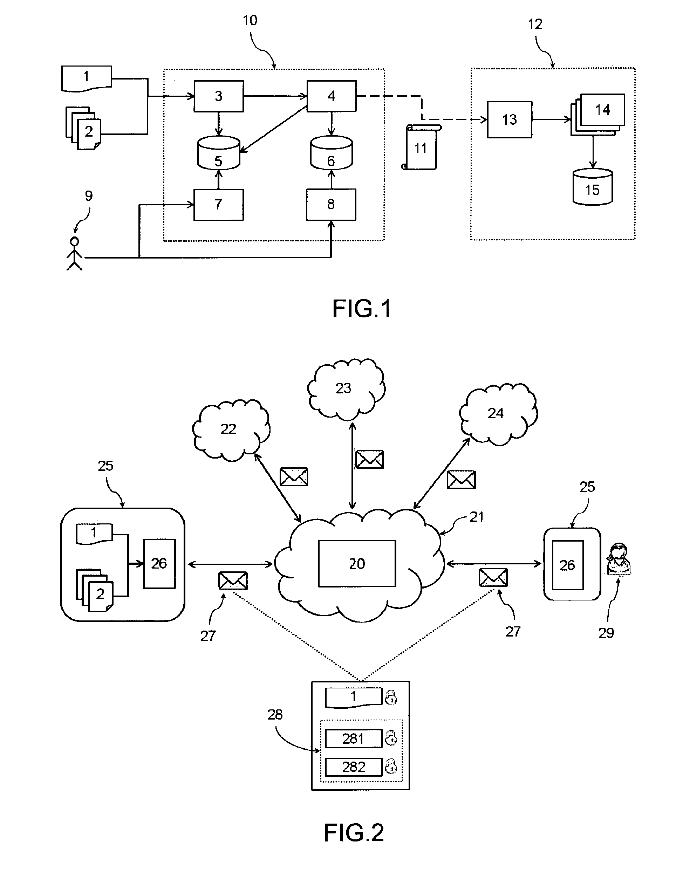

With reference to figure 1, there is shown a system enabling multi-level enforcement of a plurality of data protection policies **2** related to a given data **1.**

Multi-level enforcement of data protection policies **2** is achieved through
- a policy formalization step **10** splitting/transforming input data protection policies **2** (legacy policies) into multi-level data protection policies **11** tagged with their respective corresponding enforcement level;
- a policy enforcement step **12** selectively enforcing multi-level data protection policy **11** according to their respective corresponding enforcement level tagged therewith.

In other words, each policy element of the set of data protection policies **2** is specified with respect to the enforcement level(s) that it requires (step **10** in figure 1). Then, only appropriate policy elements at a given enforcement level for each entity interacting with the protected data **1** are extracted/selected and enforced (step **12** in figure 1).

To that end, in the policy formalization step **10,** the various input data protection policies **2** intended to be applied for protecting the data **1,** are analyzed, by a data protection policy analysis module **3,** in order to index/identify the involved elements and the type of control expressed by each of these policy elements. The type of control/governing ensured by a policy element is for example the access control, the data processing control, the storage control (e.g. retention duration, geographical location restriction).

In various embodiments, the indexation of policy elements comprised in input data protection policies **2** may be based on
- the type of interaction with data (access, storage, transfer, processing for example) that are governed by the input data protection policies **2;**
- the used policy format (XACML, EPAL, SecPAL for example).

Advantageously, the data protection policy analysis module **3** is configured to support various input formats (such as XACML, EPAL, SecPAL, JASON) of the input data protection policies **2.** The recognition of the policy elements may depend then on each supported policy format. Hence, input data protection policies **2** of different formats may be split, by the data protection policy analysis module **3,** into policies elements represented in a common internal format.

The analysis, made by the data protection policy analysis module **3,** results in an indexation of all policy elements comprised in the input data protection policies **2,** namely in a splitting of input data protection policies **2** into a plurality of policy elements.

Using information contained in a tagging knowledge base **5,** the policy elements which are identified/indexed by the data protection policy analysis module **3,** are tagged/marked, by a multi-level policy building module **4,** with the appropriate/corresponding enforcement levels.

The multi-level policy building module **4** is, further, configured to organize/sort the tagged policy elements by enforcement level, each enforcement level comprising the related policy elements expressed in the appropriate format and using the appropriate security means. In various embodiments, the sorting step of the tagged policy elements by enforcement level may be based on the appropriate security means intended for ensuring the minimum disclosure (confidentiality) and the integrity of policy elements for the enforcement level.

A tag or a mark is associated, by the multi-level policy building module **4,** to each policy element to indicate the required enforcement level. Indeed, each type of policy element may require enforcement at one or several enforcement levels. This step results in multi-level data protection policies **11** that include all the tagged elements corresponding to the various input data protection policies **2** to apply to the data **1.**

The multi-level policies **11,** which may be stored in the multi-level policy history **6,** are configured to be efficiently and flexibly checked and enforced during the enforcement step **12.**

Moreover, a multi-level policy specification module **7** is configured to allow a policy administrator **9** (a user for example) to provide the system with information, to be stored in the knowledge base **5,** permitting to
- detect/identify policy elements inside the input data protection policies **2** (for assisting the data protection policy analysis module **3);**
- associate policy elements with their respective corresponding enforcement levels (for assisting the multi-level policy building module **4)**.

As illustrative examples, the user **9** may define
- the list of supported enforcement levels;
- criteria for mapping a policy element to enforcement level (that's to say, information necessary to know what type of policy element needs to be enforced at which level). Such criteria may relate to
   o the type of interaction with the data **1** (e.g. access, storage, processing);
   o the type of security means for ensuring the minimum disclosure (confidentiality) and the integrity of policy elements as they may contain sensible information;
   o the used policy format (XACML, EPAL, SecPAL for example).

Accordingly, as non-limitative examples of the content of the knowledge base **5,** one can mention the following information

| Type of Data Control | Enforcement Levels | Protection of Policy content | Format |
|---|---|---|---|
| Access | End-user Application | Digital signature & asymmetric encryption | e.g. XACML |
| Access | Infrastructure service | Digital signature & symmetric encryption | e.g. XACML |
| Access | Operating system | Digital signature and symmetric encryption | e.g. MAC |
| Processing | End-user Application | Digital signature & asymmetric encryption | Proprietary (XML) |

| | | | |
|---|---|---|---|
| Processing | Infrastructure service | Digital signature & symmetric encryption | Proprietary (XML) |
| Storage | Infrastructure service | Digital signature & symmetric encryption | Proprietary ( XML) |

Furthermore, a multi-level policy validation module **8** is programmed for permitting a policy administrator **9** to either validate a multi-level policy created by the multi-level policy building module **4** or to modify or update an already validated multi-level policy stored in the multi-level policy history **6.** Preferably, if a multi-level policy **11** is modified, this modification is propagated to all entities hosting impacted data.

When processing the enforcement, in the policy enforcement step **12,** at a given level, the policy elements which have to be enforced at this level, are first extracted by an enforcement level-based policy extractor **13** and then enforced by a specialized policy enforcement module **14** in the corresponding level.

The enforcement level-based policy extractor **13** is in charge of
- extracting from the whole multi-level policies all the policy elements related to a given enforcement level. Some information necessary for this extraction (for example the decryption keys) need to be available, otherwise they may be requested;
- re-formatting the resulted policy elements if necessary to fit the requirements (e.g. supported policy language) of the entity in charge of the policy enforcement at a given level (end-user application, storage service, operating system);
- selecting the appropriate enforcement entities according to the enforcement levels supported by the available entities.

Subsequently, a specialized policy enforcement module **14** is in charge of enforcing the policy elements submitted by enforcement level-based policy extractor **13.**

Optionally, the information regarding all actions accomplished in the enforcement by the specialized policy enforcement module **14** may be stored in an enforcement traces database **15** that can be used for auditing the system.

Alternatively, more than one type of specialized policy enforcement module **14,** dedicated or specialized for different enforcement levels and physically distributed on different machines, may be deployed within this system. In this case, the enforcement level-based policy extractor **13** maintains up-to-date the list of all the specialized policy enforcement entities within its range of control or authority.

With reference now to figure 2, an illustrative example of the above-described method and system is given. This example presents a privacy-aware cloud data storage service **20** accessible from customer environments **25** (for example, a user equipment **25** such as a smartphone, a laptop or a desktop computer) and being provided by a cloud provider or a cloud broker environment **21** to which a plurality of public and/or private clouds **22-24** may be connected, all these environments being compatible with multi-level policies **28** enforcement.

In this illustrative example of privacy-aware cloud data storage service **20,** two enforcement levels are supported:
- access control level that contains access control policies **281** governing the actions (e.g. read, edit, copy, print, share) done on the content **27 ;**
- infrastructure level that contains control policies **282** governing the control (e.g. retention duration, geographical location constraint) related to the storage, backup, replication of the content **27.**

Accordingly, multi-level policies **28** enforcement is achieved by means of
- a data access client **26,** implementing both the policy formalization and policy enforcement steps, programmed to allow a user **29** to store contents **27** on the remote storage service **20** and share them with other users. In fact, each content **27,** sent to the storage service **20,** comprises the data **1** and policy elements **281-282** indexed (policy formalization step) from appropriate input data protection policies **2** needed for ensuring the privacy and compliance requirements of data **1** and coming from various sources (end-user privacy policy, enterprise policy, regulatory policy for example). Another data access client **26** which interacts with this shared content **27** enforces the access control level policies **281;**
- a data storage service **20,** implementing the enforcement step, programmed to enforce the infrastructure level policies **282.**

Consequently, by organizing/indexing input data protection policies **2** into different policy elements **281-282** according to the required enforcement levels (resulting in a multi-level policies **28),** the obtained multi-level policies **28** are selectively enforced (that is to say, control policies **282** are enforced at the infrastructure level by the data storage service **20,** and the access control policies **281** are enforced at the access control level by the data access client **26,** resulting in a multi-level policies enforcement).

Advantageously, the above described method and system enable an efficient and flexible enforcement of data protection policies **2** by the various entities (end-user applications, platform services and operating systems) interacting with the related data **1.**

Moreover, the above described method and system facilitate the provision of end-to-end data protection while improving the performance of the policy enforcement and ensuring the minimum disclosure (confidentiality) as well as the integrity of the policy content.

## Claims

1. A method for enforcing data protection policies **(2)** intended to be applied for the protection of a data (**1**) while it is transmitted over a communications network, said method comprising the following steps
- splitting the data protection policies **(2)** into a plurality of policy elements;
- tagging each policy element with at least an enforcement level, within the communications network, of the said policy element;
- enforcing at the said enforcement level of at least a policy element tagged with the said enforcement level.

2. The method of claim 1, wherein the splitting step of data protection policies **(2)** into a plurality of policy elements is based on at least the type of interactions with data **(1)** that are governed by the said data protection policies **(2).**

3. The method of claim 1 or 2, wherein the splitting step of data protection policies **(2)** into a plurality of policy elements is based on at least the policy format of the said data protection policies **(2).**

4. The method of any of the preceding claims, wherein it further comprises a transformation step of split policy elements into a common internal format.

5. The method of any of the preceding claims, wherein it further comprises a sorting step of tagged policy elements by enforcement level within the communications network.

6. The method of the preceding claim, wherein the sorting step of tagged policy elements by enforcement level is based on at least the type of security means intended for ensuring the minimum disclosure and the integrity of policy elements for the said enforcement level.

7. The method of any of the preceding claims, wherein it further comprises a storing step of tagged policy elements.

8. The method of any of the preceding claims, wherein it further comprises an extraction step, at an enforcement level, from tagged policy elements those tagged with the said enforcement level.

9. A system for enforcing data protection policies **(2)** intended to be applied for the protection of a data (**1**) while it is transmitted over a communications network, said system comprising the following means
- a data protection policy analysis module **(3)** configured for splitting the data protection policies **(2)** into a plurality of policy elements;
- a multi-level policy building module **(4)** programmed for tagging each policy element with at least an enforcement level, within the communications network, of the said policy element;
- a specialized policy enforcement module **(14)** configured for enforcing at the said enforcement level of at least a policy element tagged with the said enforcement level.

10. The system of claim 9, further comprising a tagging knowledge base **(5)** including information permitting
- to identify policy elements inside the data protection policies **(2);**
- to associate policy elements with their respective corresponding enforcement levels.

11. The system of claim 9 or 10, wherein information regarding the enforcement accomplished by the specialized policy enforcement module **(14)** are stored in an enforcement traces database **(15).**

12. The system of any of claims 9 to 11, further comprising an enforcement level-based policy extractor **(13)** configured to extract, at an enforcement level, from tagged policy elements those tagged with the said enforcement level.

13. A communications network entity comprising a specialized policy enforcement module **(14)** as defined in claim 9.

14. A user equipment **(25)** comprising a data protection policy analysis module **(3)** and a multi-level policy building module **(4)** as defined in claim 9.

15. Computer program implemented on a processing unit of a computer, said program including code sections for performing instructions corresponding to the steps of a method according to any of claims 1-8.
